Europäisches Patentamt

European Patent Office

Office européen des brevets

(11) Veröffentlichungsnummer: **0 212 176 B1**

# (12) EUROPÄISCHE PATENTSCHRIFT

(45) Veröffentlichungstag der Patentschrift: **01.04.92**

(21) Anmeldenummer: **86109110.6**

(22) Anmeldetag: **03.07.86**

(51) Int. Cl.⁵: **B60Q 1/04**

## (54) Kraftfahrzeug mit Leuchtenschutzvorrichtung.

(30) Priorität: **21.08.85 DE 3529912**

(43) Veröffentlichungstag der Anmeldung:
**04.03.87 Patentblatt 87/10**

(45) Bekanntmachung des Hinweises auf die
Patenterteilung:
**01.04.92 Patentblatt 92/14**

(84) Benannte Vertragsstaaten:
**AT BE CH DE FR GB IT LI LU NL SE**

(56) Entgegenhaltungen:
**GB-A- 509 228**
**GB-A- 1 334 855**
**US-A- 3 441 729**

(73) Patentinhaber: **Rumpp, Gerhard**
**Schornstrasse 2**
**W-8084 Inning/Ammersee(DE)**

(72) Erfinder: **Rumpp, Gerhard**
**Schornstrasse 2**
**W-8084 Inning/Ammersee(DE)**

(74) Vertreter: **Patentanwälte Grünecker, Kinkeldey, Stockmair & Partner**
**Maximilianstrasse 58**
**W-8000 München 22(DE)**

Rank Xerox (UK) Business Services

**Beschreibung**

Die Erfindung betrifft ein Kraftfahrzeug mit zumindest einer Außenleuchte mit einem Reflektor und einem Leuchtenglas und mit einer im Lichtaustrittsbereich der Leuchte angeordneten, schwenkbaren Schutzvorrichtung. Die Erfindung betrifft ferner die Schutzvorrichtung für eine Außenleuchte eines Kraftfahrzeugs selbst.

Bei Kraftfahrzeugen, welche im Gelände oder auf schlechten Wegstrecken zum Einsatz kommen, ist es wünschenswert, die Leuchten vor Beschädigungen zu schützen. Zu diesem Zwecke wurden vor die Leuchten Schutzvorrichtungen, wie etwa Schutzgitter oder Schutzroste angeordnet. Um ihre Schutzfunktion erfüllen zu können, müssen die Schutzvorrichtungen bzw. deren im Lichtaustrittsbereich der Leuchte liegende Teile ausreichend groß dimensioniert werden. Dies bringt den entscheidenden Nachteil mit sich, daß sich die Lichtausbeute der Leuchte stark vermindert. Dies wiederum hat zur Folge, daß die Mindestleuchtstärke unterschritten wird, so daß die Betriebserlaubnis für das Fahrzeug erlöschen kann. Weiterhin ist es notwendig, daß das Leuchtenglas der Leuchte zu Reinigungszwecken frei zugänglich ist, um die Leuchtstärke vermindernde Verschmutzungen beseitigen zu können. Bei einer Schutzvorrichtung, welche auch größere Belastungen, etwa durch hochgewirbelte Steine oder durch Pflanzen von der Leuchte abhalten und diese vor Zerstörung schützen soll, ist es notwendig, daß die Schutzvorrichtung so vor der Leuchte befestigt ist, daß auf sie einwirkende Kräfte auf die Fahrzeugkarosserie übergeleitet werden können. Eine derartige feste Anordnung der Schutzvorrichtung erschwert oder verhindert jedoch die Zugänglichkeit des Leuchtenglases zum Zwecke der Reinigung.

Ein Kraftfahrzeug sowie eine Schutzvorrichtung der eingangs genannten Art sind aus der US-A-4 099 760 bekannt. Hierbei ist an der Vorderfront eines Kraftfahrzeuges ein klappbar befestigter Rammschutz mit in diesen eingearbeiteten Lampengrill vorgesehen, der zugleich in einer herabgeklappten Position als Lagerungseinrichtung dienen kann. Ein derartiger Rammschutz ist jedoch verhältnismäßig massereich und behindert den Zugang zu den Scheinwerfern.

Der Erfindung liegt die Aufgabe zugrunde, ein Kraftfahrzeug und eine Schutzvorrichtung für eine Außenleuchte eines Kraftfahrzeuges zu schaffen, wobei die Schutzvorrichtung zum Zwecke des Zugangs zu der Leuchte, z.B. für die Reinigung derselben, aus deren Lichtaustrittsbereich entfernt werden kann und die einfach und leicht aufgebaut sowie kostengünstig herstellbar ist und eine ausreichende Schutzwirkung für die Außenleuchte gewährleistet, ohne die Leuchtstärke der Außenleuchte in unerwünscht starker Weise zu vermindern.

Diese Aufgabe wird in bezug auf ein Kraftfahrzeug der im Oberbegriff des Anspruchs 1 genannten Art erfindungsgemäß dadurch gelöst, daß die Schutzvorrichtung um eine außerhalb des Lichtaustrittsbereiches der Außenleuchte angeordnete, im wesentlichen vertikale Achse schwenkbar und im Lichtaustrittsbereich abstandjustiert zum Leuchtenglas arretierbar ist.

Im Hinblick auf eine Schutzvorrichtung der im Oberbegriff des Anspruches 19 bezeichneten Art wird die vorgenannte Aufgabe erfindungsgemäß dadurch gelöst, daß die Schutzvorrichtung Stege und ein Schwenklagerteil zur Schwenklagerung der Schutzvorrichtung um eine im wesentlichen vertikale Achse sowie eine Arretierungsvorrichtung zur abstandsjustierten Anordnung der Schutzvorrichtung zum Leuchtenglas der Außenleuchte aufweist.

Das erfindungsgemäße Kraftfahrzeug und die erfindungsgemäße Schutzvorrichtung zeichnen sich durch eine Reihe erheblicher Vorteile aus. Die Schutzvorrichtung kann aus einer Betriebsstellung, in welcher sie vor der Leuchte angeordnet ist, in eine Reinigungsstellung, in welcher sie außerhalb des Lichtaustrittsbereichs der Leuchte angeordnet ist, verschwenkt werden. Auf diese Weise ist das Leuchtenglas frei zugänglich und kann in erforderlicher Weise gereinigt werden. Da die Drehachse der Schutzvorrichtung senkrecht zur Mittelachse des Reflektors angeordnet ist, beschreiben die zum direkten Schutz des Leuchtenglases vorgesehenen Teile der Schutzvorrichtung beim Verschwenken der Schutzvorrichtung jeweils eine Kreisbewegung um deren Drehachse. Diese Kreisbewegung erfolgt in einer Ebene, welche parallel zu einer Mittelebene des Reflektors liegt. Auf diese Weise ist sichergestellt, daß durch die Schwenkbewegungkeine Schrägstellung von Teilen der Schutzvorrichtung erfolgt, welche zu einer unerwünscht hohen Abdeckung des Leuchtenglases und damit zu einer Verminderung der Leuchtstärke führen kann. Mittels einer Arretiervorrichtung ist die Schutzvorrichtung in ihrer Betriebsstellung in einem veränderbaren Abstand zum Leuchtenglas arretierbar. Durch die Möglichkeit, diesen Abstand zu verändern, ist es möglich, die Schutzvorrichtung in eine genaue Lage zum Leuchtenglas bzw. zum Brennpunkt des Reflektors einzujustieren. Diese genaue Lage wird bauartbedingt so ermittelt, daß eine minimale Verminderung der Leuchtstärke der Leuchte eintritt. Da durch Veränderungen am Fahrzeug, z.B. infolge eines leichten Unfalls, eine Veränderung der Relativlage zwischen der Leuchte und der Drehachse der Schutzvorrichtung eintreten kann, ist es somit möglich, durch die Einjustierung des Abstands eine optimale Leuchtstärke der Leuchte zu ermöglichen.

Eine besonders vorteilhafte Ausgestaltung des erfindungsgemäßen Kraftfahrzeuges ist dadurch gegeben, daß die Außenleuchte in Form eines vorderen Hauptscheinwerfers ausgebildet ist und daß die vertikale Drehachse an der der Fahrzeuglängsachse zugewandten Seite der Schutzvorrichtung angeordnet ist und/oder daß die Außenleuchte in Form einer Rückleuchte ausgebildet ist und daß die vertikale Drehachse an der der Fahrzeuglängsachse abgewandten Seite der Schutzvorrichtung angeordnet ist. Bei einer derartigen Ausgestaltung sind die beiden vertikalen Drehachsen der Schutzvorrichtungen der Hauptscheinwerfer einander benachbart in der Nähe des Kühlergrills vorgesehen, während die beiden Drehachsen der Schutzvorrichtungen der Rückleuchten am hinteren seitlichen Außenbereich der Fahrzeugkarosserie vorgesehen sind. Eine derartige Anordnung erweist sich als besonders vorteilhaft, da die Schutzvorrichtungen bei Vorwärtsfahrt des Fahrzeuges in ihre Betriebsstellung zurückgeschwenkt werden, falls dies vom Bedienungspersonal z.B. nach einer Reinigung der Leuchtengläser vergessen wurde. Eine derartige Anordnung der Drehachsen führt zu einer wesentlichen Erhöhung der Betriebssicherheit des Kraftfahrzeuges, da es ausgeschlossen ist, daß sich eine der Schutzvorrichtungen beim Betrieb des Fahrzeuges so verschwenkt, daß sie vom Umfang der Karosserie absteht und andere Verkehrsteilnehmer gefährdet. Eine nicht in Betriebsstellung verriegelte Schutzvorrichtung wird somit entweder durch den bei der Fahrt auftretenden Luftwiderstand oder durch Berührung eines Hindernisses sofort in ihre Betriebsposition verschwenkt, wobei dieser Vorgang derart erfolgen kann, daß eine nachfolgend noch beschriebene Arretierungsvorrichtung einrastet und die Schutzvorrichtung in ihrer ordnungsgemäßen Position arretiert.

Mit Vorteil ist die Schutzvorrichtung im wesentlichen in einer zur Mittelachse des Reflektors senkrechten Ebene angeordnet. Auf diese Weise wird ein optimaler Schutz für das Leuchtenglas gewährleistet und gleichzeitig sichergestellt, daß in der Betriebsstellung der Schutzvorrichtung, in welcher sie in dieser senkrechten Ebene angeordnet ist, über die gesamte Fläche des Leuchtenglases eine gleichmäßig minimale Verminderung der Leuchtstärke auftritt.

In besonders vorteilhafter Weise ist die Schutzvorrichtung in Form mehrerer, zueinander paralleler Stege ausgebildet, welche vorteilhafterweise senkrecht zur Drehachse der Schutzvorrichtung angeordnet sind. Die Stege weisen vorteilhafterweise einen rechteckigen Querschnitt auf, wobei die Ausdehnung der Stege in Richtung des Lichtaustritts wesentlich größer sein kann als ihre Dimensionierung senkrecht zur Lichtaustrittsfläche. Die Stege können somit aus Stabmaterial hergestellt werden, die Breite dieses Stabmaterials bewirkt wegen der erfindungsgemäßen Anordnung der Drehachse der Schutzvorrichtung auch bei einer nicht vorschriftsmäßig in ihre Betriebsstellung verschwenkten Anordnung der Schutzvorrichtung nur eine minimale Abschwächung der Leuchtstärke. Somit ist auch bei nicht optimal einjustiertem Abstand zwischen Schutzvorrichtung und Leuchtenglas die Betriebssicherheit des Kraftfahrzeuges nicht beeinträchtigt.

In vorteilhafter Weise können die mehreren Stege der Schutzvorrichtung an einem Rahmen befestigt sein. Dieser Rahmen kann wesentlich größer dimensioniert werden als die Stege, so daß ein zusätzlicher Schutz der Leuchte gewährleistet ist. Weiterhin ist es möglich diesen Rahmen mit einem Front- oder Heckschutzbügel des Kraftfahrzeuges zu kombinieren.

Die Stege können horizontal und/oder vertikal zur Kraftfahrzeugkarosserie angeordnet sein. Vorzugsweise sind die Stege senkrecht zur Drehachse der Schutzvorrichtung angeordnet, so daß bei vertikaler Drehachse die Stege bevorzugt horizontal verlaufen.

Als besonders vorteilhaft erweist es sich, daß im Bereich der größten Lichtdichte der Leuchte kein Steg angeordnet ist. Bei den heute üblichen Hauptscheinwerfern ist es besonders vorteilhaft, wenn der mittlere Steg der Schutzvorrichtung um etwa 2 bis 5 mm unter der unteren Lichtkante des Abblendlichtes liegt. Da bauartbedingt zu dem nächsthöheren Steg ein etwas größerer Abstand vorgesehen ist, findet im Bereich der unteren Lichtkante des Abblendlichtes keine Verminderung der Leuchtstärke der Leuchte statt.

Im folgenden wird die Erfindung anhand von Ausführungsbeispielen in Verbindung mit der Zeichnung beschrieben. Dabei zeigen

Fig. 1     in vereinfachter perspektivischer Darstellung den linken vorderen Hauptscheinwerfer sowie den linken vorderen Fahrtrichtungsanzeiger eines Kraftfahrzeuges mit der erfindungsgemäßen Schutzvorrichtung,

Fig. 2     ein zweites Ausführungsbeispiel in einer Darstellung analog Fig. 1,

Fig. 3     eine Vorderansicht des rechten vorderen Hauptscheinwerfers und des rechten vorderen Fahrtrichtungsanzeigers eines Kraftfahrzeuges mit der erfindungsgemäßen Schutzvorrichtung und

Fig. 4     eine Draufsicht auf das Ausführungsbeispiel der Fig. 3,

Fig. 5     eine Draufsicht auf ein mit den erfindungsgemäßen Schutzvorrichtungen ausgerüstetes Kraftfahrzeug,

Fig. 6     einen Schnitt durch die erfindungsgemäße Arretierungsvorrichtung.

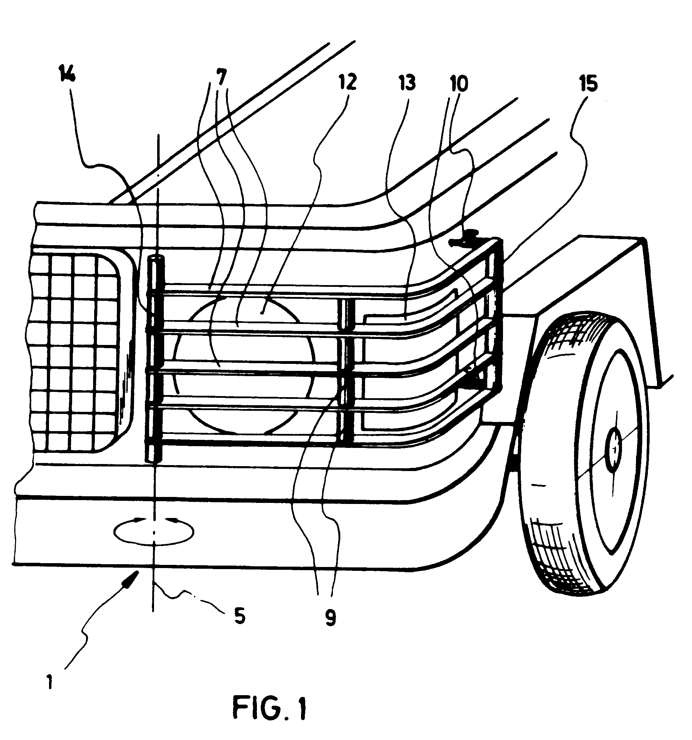

Die Fig. 1 zeigt in perspektivischer Ansicht die linke vordere Hauptleuchte eines Kraftfahrzeuges sowie den linken vorderen Fahrtrichtungsanzeiger.

Seitlich an der Karosserie ist eine Drehachse 5 vorgesehen, um welche eine Schutzvorrichtung 1 schwenkbar ist. Die Schutzvorrichtung 1 weist mehrere Stege 7 auf, welche in der gezeigten Betriebsstellung der Schutzvorrichtung 1 horizontal vor dem Hauptscheinwerfer 12 sowie dem Fahrtrichtungsanzeiger 13 angeordnet sind. Die Stege 7 weisen einen rechteckigen Querschnitt auf, wobei ihre in Fahrtrichtung nach vorne und zur Seite weisenden Kanten abgerundet sind. Die Rundung weist vorzugsweise einen Radius von 2,5 mm auf, so daß jeder Steg 7 bei dem gezeigten Ausführungsbeispiel eine Höhe von 5 mm aufweist. Die Tiefe des Steges beträgt in dem gezeigten Ausführungsbeispiel 20 mm. Die Stege sind an ihren Enden jeweils mit einem Stab 14, 15 verbunden. Der Stab 14 ist in nicht dargestellter Weise um die Drehachse 5 schwenkbar an der Fahrzeugkarosserie befestigt. Die Schwenkbewegung des Stabes 14 kann z.B. mittels eines handelsüblichen Scharniers oder ähnlichem ermöglicht werden. An dem Stab 15 ist ein Teil einer im einzelnen nicht dargestellten Arretierungsvorrichtung 10 angeordnet, deren anderer Teil an der Karosserie des Kraftfahrzeuges befestigt ist. Mit Hilfe der Arretierungsvorrichtung ist es möglich, den Abstand der Schutzvorrichtung bzw. der einzelnen Stege vom Leuchtenglas 6 bzw. vom Hauptscheinwerfer 12 einzujustieren. Die Arretierungsvorrichtung 10 ist so ausgebildet, daß die Schutzvorrichtung entweder stufenlos oder in einzelnen Stufen zur Einjustierung des Abstandes verschwenkt werden kann. Die Stege 7 sind so ausgebildet, daß sie im Lichtaustrittsbereich des Hauptscheinwerfers 12 im wesentlichen in einer zur Mittelachse 4 des Hauptscheinwerfers 12 senkrechten Ebene gelegen sind, wenn sich die Schutzvorrichtung in ihrer Betriebsstellung befindet. Die Stege 7 sind im seitlichen Bereich des Kraftfahrzeuges umgebogen, um einen ausreichenden Schutz des Fahrtrichtungsanzeigers 13 zu gewährleisten. Die Form der Stege im Bereich des Fahrtrichtungsanzeigers richtet sich nach dessen Ausbildung und nach den Gegebenheiten des Kraftfahrzeugs. In einem Bereich, der weder im Lichtaustrittsbereich des Hauptscheinwerfers 12 noch im Lichtaustrittsbereich des Fahrtrichtungsanzeigers 13 liegt, sind Abstandselemente 9 vorgesehen, welche die Stege 7 miteinander verbinden und die Stabilität der Schutzvorrichtung 1 erhöhen.

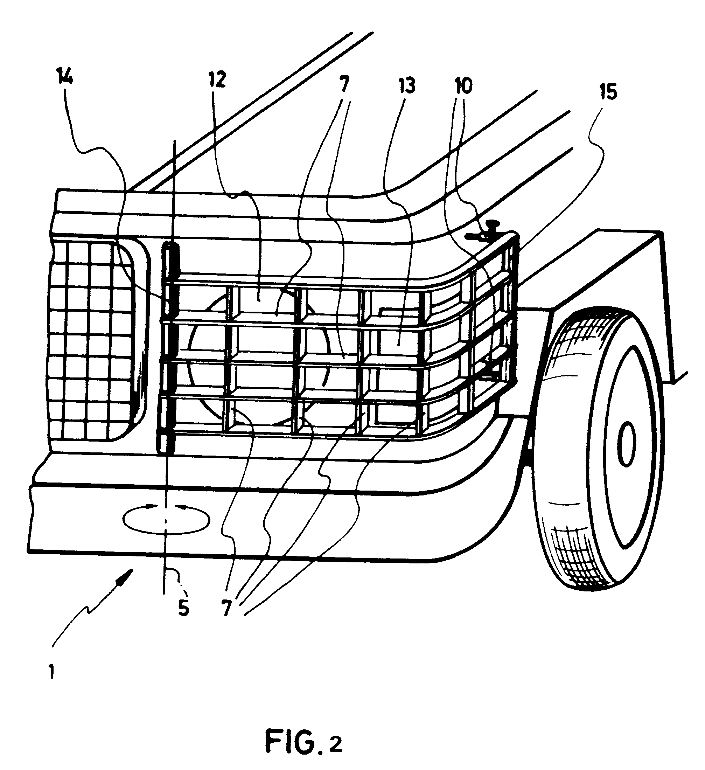

Figur 2 zeigt ein weiteres Ausführungsbeispiel, welches analog zu dem Ausführungsbeispiel der Fig. 1 aufgebaut ist. Die Drehachse 5 der Schutzvorrichtung 1 verläuft vertikal. Die Schutzvorrichtung 1 weist, wie in Fig. 1 dargestellt, horizontale Stege 7, sowie zusätzlich vertikale Stege 7 auf.

Die Stege können, wie in Fig. 1 gezeigt, dimensioniert sein. Es ist jedoch auch möglich, anstelle eines rechteckigen Querschnitts einen runden Querschnitt für die Stege vorzusehen.

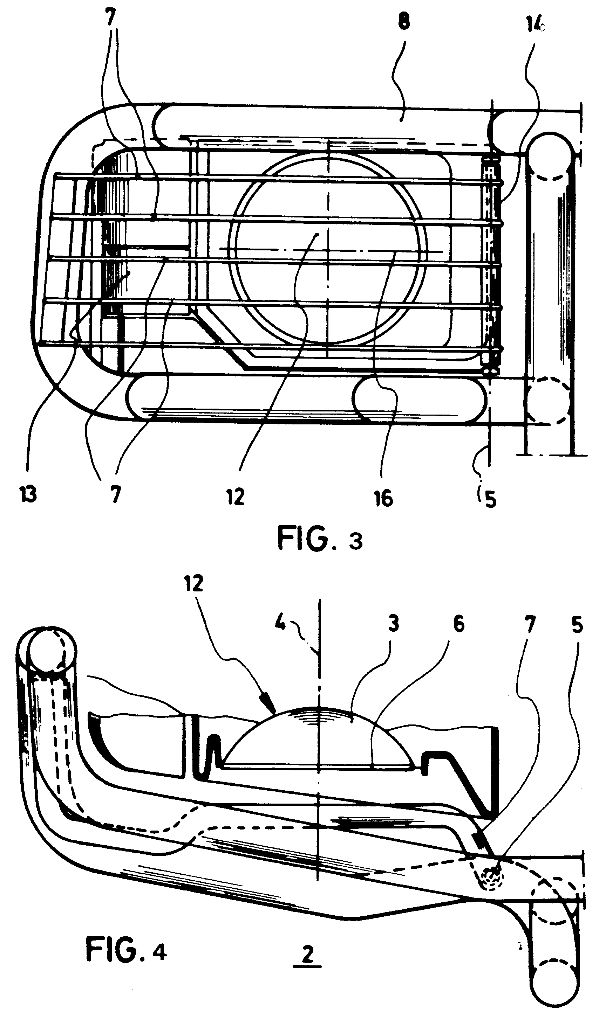

Figur 3 zeigt eine Vorderansicht eines weiteren Ausführungsbeispiels. Der dargestellte Hauptscheinwerfer 12 ist in diesem Fall der rechte vordere Hauptscheinwerfer, der Fahrtrichtungsanzeiger 13 ist der rechte vordere Fahrtrichtungsanzeiger. Bei diesem Ausführungsbeispiel sind die Stege ebenfalls horizontal angeordnet und um die vertikale Drehachse 5 verschwenkbar. Auf die Darstellung der Arretierungsvorrichtung 10 wurde der Einfachheit halber verzichtet. Die Stege 7 sowie der um die Drehachse 5 verschwenkbare Stab 14 sind in einem Rahmen 8 gelagert. Wie aus Fig.4, welche eine Draufsicht auf das Ausführungsbeispiel der Fig. 3 zeigt, ersichtlich ist, sind die Stege 7 im Bereich der Lichtaustrittsöffnung 2 des Hauptscheinwerfers 12 in einer zur Mittelachse 4 senkrechten Ebene angeordnet. Durch eine Schwenkbewegung um die Drehachse 5 ist der Abstand der Stege zu dem Leuchtenglas 6 bzw. zum Brennpunkt des Reflektors 3 veränderbar. Im Bereich einer Mittelebene 16, in welcher der Hauptscheinwerfer 12 seine größte Leuchtstärke aufweist, ist kein Steg angeordnet. Vielmehr ist der nächstliegende Steg 7 um einen gewissen Betrag nach unten versetzt. Somit findet keine Abdeckung des lichtstärksten mittleren Bereichs des Hauptscheinwerfers 12 statt. Bei dem gezeigten Ausführungsbeispiel kann der Rahmen 8 zusammen mit den Stegen 7 um die Drehachse 5 verschwenkbar ausgestaltet sein. Es ist jedoch auch möglich, den Rahmen 8 fest am Kraftfahrzeug zu befestigen.

Die erfindungsgemäße Schutzvorrichtung kann auch so ausgebildet sein, daß die Drehachse 5 nicht zur Schwenkung der Schutzvorrichtung selbst sondern zur Verschwenkung eines Frontschutzbügels für das Kraftfahrzeug dient, an welchem die Stege der Schutzvorrichtung befestigt sind. Die Arretierungsvorrichtung 10 zur Justierung des Abstandes der Stege 7 vom Leuchtenglas 6 kann so ausgebildet sein, daß nach einmal erfolgter Grundeinstellung die Schutzvorrichtung in ihrer Betriebsstellung stets wieder in dieselbe Position einrastet. Die Kontrolle des korrekten Abstands zwischen den Stegen 7 und dem Leuchtenglas 6 kann z.B. mittels einer Lehre erfolgen.

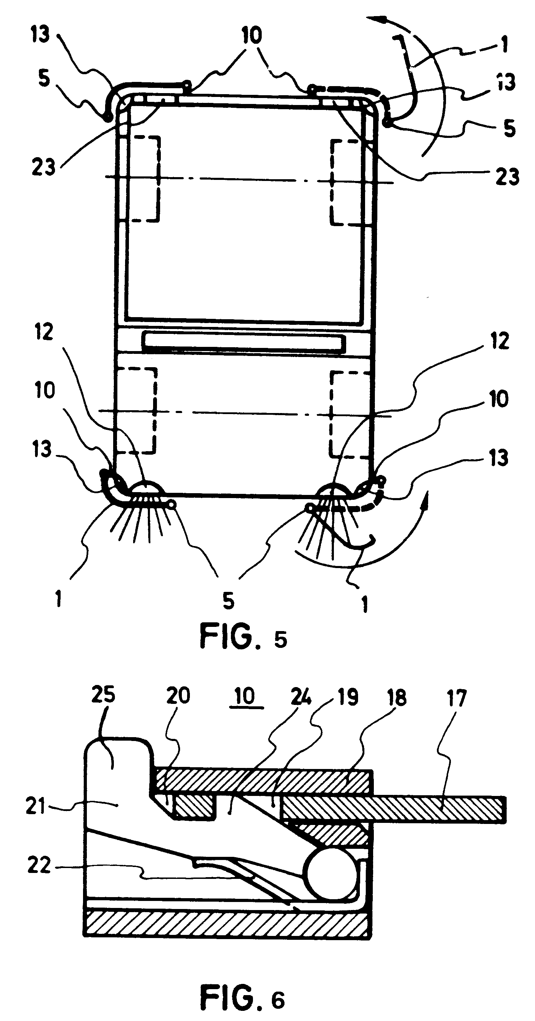

Die Fig. 5 zeigt eine Draufsicht auf ein Kraftfahrzeug, welches zwei Hauptscheinwerfer 12, zwei Rückleuchten 23 sowie an jeder Ecke jeweils einen Fahrtrichtungsanzeiger 13 aufweist. Die Hauptscheinwerfer, die Fahrtrichtungsanzeiger sowie die Rückleuchten sind jeweils durch eine Schutzvorrichtung 1 schützbar. Die Schutzvorrichtungen 1 bzw. deren Drehachsen 5 sind so angeordnet, daß die Drehachsen der die Hauptscheinwerfer 12 schützenden Schutzvorrichtungen 1 vertikal an der Seite der Schutzvorrichtung 1 angeordnet sind, welche der Fahrzeuglängsachse zugewandt ist. Die Drehachsen 5 der hinteren, die Rückleuchten schützenden Schutzvorrichtungen 1 sind so angeordnet, daß sie an der der Fahrzeuglängsachse abgewandten Seite der jeweiligen Schutzvorrichtung angeordnet sind. In der linken Bildhälfte der Fig. 6 sind die Schutzvorrichtungen 1 in ihrer Betriebsstellung dargestellt. Die rechte Hälfte der Fig. 6 zeigt die Schutzvorrichtungen 1 in einer Stellung, in welcher sie von der Rückleuchte 23 bzw. dem Hauptscheinwerfer 12 weggeschwenkt sind. Durch die Anordnung der Drehachsen 5 wird sichergestellt, daß in dem Falle, in welchem die Bedienungsperson vergessen hat, vor Fahrtbeginn bzw. nach Beendigung der Reinigung der Leuchtengläser die Schutzvorrichtungen 1 in ihre Betriebsposition zurückzuverschwenken, dieser Rückschwenkvorgang durch den Fahrtwind oder durch Berührung mit einem Hindernis selbsttätig erfolgt. Somit ist sichergestellt, daß keine von der Fahrzeugkarosserie vorspringenden Teile vorhanden sind, welche andere Verkehrsteilnehmer, z.B. Fußgänger gefährden könnten.

Fig. 6 zeigt einen Schnitt durch ein Ausführungsbeispiel der erfindungsgemäßen Arretierungsvorrichtung. Die Arretierungsvorrichtung 10 umfaßt eine Lasche 17 sowie einen Block 18. Die Lasche 17 ist vorzugsweise mit einem rechteckigen Querschnitt ausgestaltet und weist in ihrem vorderen Endbereich eine Ausnehmung 19 auf. Der Block 18 ist mit einer Ausnehmung 20 ausgestattet, welche in ihren Dimensionen so gewählt ist, daß die Lasche 17 in diese Ausnehmung 20 einführbar ist. Der Block 18 weist weiterhin ein Element 21 auf, welches verschwenkbar an dem Block 18 gelagert ist. Das Element 21 ist mit einem Vorsprung 24 versehen, welcher in formschlüssigen Eingriff mit der Ausnehmung 19 der Lasche 17 bringbar ist. In der in Fig. 6 dargestellten Position wird somit verhindert, daß die Lasche 17 vom Block 18 entfernbar ist. Das Element 21 wird mittels eines elastischen Bauteils 22 so vorgespannt, daß der Vorsprung 24 in Eingriff mit der Ausnehmung 19 verbleibt. Die Arretierungsvorrichtung 10 ermöglicht somit durch Einführung der Lasche 17 in den Block 18 eine einfache Verrastung der Schutzvorrichtung 1 mit der Fahrzeugkarosserie. Je nach Bedarf, kann entweder die Lasche 17 oder der Block 18 an der Karosserie oder an der Schutzvorrichtung 1 befestigt sein. Um die Schutzvorrichtung 1 von der Karosserie des Kraftfahrzeuges wegzuschwenken, ist es nötig, eine Kraft auf einen Betätigungsabschnitt 25 des Elementes 21 aufzubringen und somit den Vorsprung 24 aus der Ausnehmung 19 zu verschwenken. Somit ist sichergestellt, daß sich die Schutzvorrichtung 1 nicht selbsttätig während der Fahrt des Kraftfahrzeuges lösen kann.

Die Anwendung der erfindungsgemäßen Schutzvorrichtung ist nicht auf die gezeigten Anwendungsbeispiele bei Hauptscheinwerfern und vorderen Fahrtrichtungsanzeigern beschränkt. Vielmehr ist es möglich, jede Außenleuchte eines Kraftfahrzeuges mit einer derartigen Schutzvorrichtung zu versehen. Auch können für einen Hauptscheinwerfer und einen zugehörigen Fahrtrichtungsanzeiger getrennte einzelne Schutzvorrichtungen vorgesehen werden.

Weiterhin ist es möglich, zum Zwecke einer besonders wirkungsvollen Kraftübertragung von der Schutzvorrichtung auf die Kraftfahrzeugkarosserie zusätzlich zu dem Rastmechanismus 10 einstellbare Anschläge vorzusehen, mittels derer vermieden wird, daß der Rastmechanismus bei einem Auftreffen des Fahrzeuges auf ein Hindernis übermäßig belastet wird.

**Patentansprüche**

1. Kraftfahrzeug mit zumindest einer Außenleuchte mit einem Reflektor und einem Leuchtenglas und mit einer in ihrer Betriebslage im Lichtaustrittsbereich der Außenleuchte angeordneten, schwenkbaren Schutzvorrichtung, **dadurch gekennzeichnet**, daß die Schutzvorrichtung (1) um eine außerhalb des Lichtaustrittsbereiches (2) der Außenleuchte angeordnete, im wesentlichen vertikale Achse (5) schwenkbar und im Lichtaustrittsbereich (2) abstandsjustiert zum Leuchtenglas (6) arretierbar ist.

2. Kraftfahrzeug nach Anspruch 1, **dadurch gekennzeichnet**, daß die Schutzvorrichtung (1) mit einem veränderbaren Abstand zum Leuchtenglas (6) justierbar ist.

3. Kraftfahrzeug nach Anspruch 1 oder 2, **dadurch gekennzeichnet**, daß die Außenleuchte in Form eines vorderen Hauptscheinwerfers (12) ausgebildet ist und daß die vertikale Achse (5) an der der Fahrzeuglängsachse zugewandten Seite der Schutzvorrichtung (1) angeordnet ist.

4. Kraftfahrzeug nach zumindest einem der Ansprüche 1 bis 3, **dadurch gekennzeichnet**, daß die Außenleuchte in Form einer Rückleuchte (23) ausgebildet ist und daß die vertikale Achse (5) an der der Fahrzeuglängsachse abgewandten Seite der Schutzvorrichtung (1) angeordnet ist.

5. Kraftfahrzeug nach zumindest einem der Ansprüche 1 bis 4, **dadurch gekennzeichnet**, daß die Schutzvorrichtung (1) im wesentlichen in einer zur Mittelachse (4) des Reflektors (3) senkrechten Ebene angeordnet ist.

6. Kraftfahrzeug nach zumindest einem der Ansprüche 1 bis 5, **dadurch gekennzeichnet**, daß die Schutzvorrichtung (1) in Form mehrerer, zueinander paralleler Stege (7) ausgebildet ist.

7. Kraftfahrzeug nach Anspruch 6, **dadurch gekennzeichnet**, daß die Stege (7) senkrecht zu der vertikalen Achse (5) angeordnet ist.

8. Kraftfahrzeug nach Anspruch 7, **dadurch gekennzeichnet**, daß jeder Steg (7) im wesentlichen einen rechteckigen Querschnitt aufweist.

9. Kraftfahrzeug nach zumindest einem der Ansprüche 6 bis 8, **dadurch gekennzeichnet**, daß die Stege (7) an einem Rahmen (8) befestigt sind.

10. Kraftfahrzeug nach zumindest einem der Ansprüche 6 bis 9, **dadurch gekennzeichnet**, daß die Stege (7) horizontal angeordnet sind.

11. Kraftfahrzeug nach zumindest einem der Ansprüche 6 bis 9, **dadurch gekennzeichnet**, daß die Stege (7) vertikal angeordnet sind.

12. Kraftfahrzeug nach zumindest einem der Ansprüche 6 bis 11, **dadurch gekennzeichnet**, daß zwischen den Stegen (7) Abstandselemente (9) vorgesehen sind.

13. Kraftfahrzeug nach zumindest einem der Ansprüche 6 bis 9 und 12, **dadurch gekennzeichnet**, daß die Schutzvorrichtung (1) in Form mehrerer vertikaler und horizontaler Stege (7) ausgebildet ist.

14. Kraftfahrzeug nach zumindest einem der Ansprüche 6 bis 13, **dadurch gekennzeichnet**, daß im Bereich der größten Lichtdichte der Außenleuchte kein Steg (7) angeordnet ist.

15. Kraftfahrzeug nach zumindest einem der Ansprüche 1 bis 14, **dadurch gekennzeichnet**, daß zur Arretierung der Schutzvorrichtung (1) eine in Stufen einstellbare Arretierungsvorrichtung (10) vorgesehen ist.

16. Kraftfahrzeug nach Anspruch 15, **dadurch gekennzeichnet**, daß die Arretierungsvorrichtung (10) eine Lasche (17) sowie einen Block (18) aufweist, wobei die Lasche an ihrem freien Endbereich mit einer Ausnehmung (19) und wobei der Block (18) mit einer Ausnehmung (20) zur Aufnahme der Lasche (17) versehen sind und wobei ein bewegbares Element (21) im Bereich der Ausnehmung (20) am Block (18) gelagert und in formschlüssigen, verriegelnden Eingriff mit der Ausnehmung (19) der Lasche (17) bringbar ist.

17. Kraftfahrzeug nach Anspruch 16, **dadurch gekennzeichnet**, daß das Element (21) mittels eines elastischen Bauteils (22) in Eingriffsrichtung mit der Ausnehmung (19) vorgespannt ist.

18. Kraftfahrzeug nach zumindest einem der Ansprüche 1 bis 17, **dadurch gekennzeichnet**, daß die Schutzvorrichtung (1) einstückig mit einem schwenkbar an der Karosserie angelenkten Rammschutzbügel ausgebildet ist.

19. Schutzvorrichtung für eine Außenleuchte eines Kraftfahrzeuges, wobei die Schutzvorrichtung in ihrer Betriebslage im Lichtaustrittsbereich der mit einem Reflektor und einem Leuchtenglas versehenen Außenleuchte schwenkbar angeordnet ist, **dadurch gekennzeichnet**, daß die Schutzvorrichtung (1) Stege (7) und ein Schwenklagerteil (14) zur Schwenklagerung der Schutzvorrichtung (1) um eine im wesentlichen vertikale Achse (5) sowie eine Arretierungsvorrichtung (10) zur abstandsjustierten Anordnung der Schutzvorrichtung (1) zum Leuchtenglas (6) der Außenleuchte aufweist.

20. Schutzvorrichtung nach Anspruch 19, **dadurch gekennzeichnet**, daß sie mit einem einstellbaren Abstand zum Leuchtenglas (6) arretierbar ist.

## Claims

1. Motor vehicle having at least one outside lamp, exhibiting a reflector and a lamp glass, and having a pivotable protective device disposed, in its operating position, in the light-emission area of the outside lamp, characterised in that the protective device (1) is pivotable about an essentially vertical axis (5) disposed outside the light-emission area (2) of the outside lamp and can be locked in position in the light-emission area (2), distance-adjusted in relation to the lamp glass (6).

2. Motor vehicle according to Claim 1, characterised in that the protective device (1) can be adjusted at variable distance from the lamp glass (6).

3. Motor vehicle according to Claim 1 or 2, characterised in that the outside lamp is configured in the form of a front main headlamp (12) and that the vertical axis (5) is disposed on the side of the protective device (1) facing the vehicle's longitudinal axis.

4. Motor vehicle according to at least one of Claims 1 to 3, characterised in that the outside lamp is configured in the form of a rear lamp (23) and that the vertical axis (5) is disposed on the side of the protective device (1) facing away from the vehicle's longitudinal axis.

5. Motor vehicle according to at least one of Claims 1 to 4, characterised in that the protective device (1) is essentially disposed in a plane perpendicular to the centre axis (4) of the reflector (3).

6. Motor vehicle according to at least one of Claims 1 to 5, characterised in that the protective device (1) is configured in the form of a plurality of parallel-running bars (7).

7. Motor vehicle according to Claim 6, characterised in that the bars (7) are disposed perpendicularly to the vertical axis (5).

8. Motor vehicle according to Claim 7, characterised in that each bar (7) essentially exhibits a rectangular cross-section.

9. Motor vehicle according to at least one of Claims 6 to 8, characterised in that the bars (7) are fastened to a frame (8).

10. Motor vehicle according to at least one of Claims 6 to 9, characterised in that the bars (7) are disposed horizontally.

11. Motor vehicle according to at least one of Claims 6 to 9, characterised in that the bars (7) are disposed vertically.

12. Motor vehicle according to at least one of Claims 6 to 11, characterised in that between the bars (7) there are provided spacing elements (9).

13. Motor vehicle according to at least one of Claims 6 to 9 and 12, characterised in that the protective device (1) is configured in the form of a plurality of vertical and horizontal bars (7).

14. Motor vehicle according to at least one of Claims 6 to 13, characterised in that, in the area of the greatest light density of the outside lamp, no bar (7) is disposed.

15. Motor vehicle according to at least one of Claims 1 to 14, characterised in that, for the locking into position of the protective device (1), there is provided a locking device (10) which can be adjusted in steps.

16. Motor vehicle according to Claim 15, characterised in that the locking device (10) exhibits a tab (17) and a block (18), the tab being provided, in the area of its free end, with a recess (19), and the block (18) being provided with a recess (20) for receiving the tab (17), and a movable element (21) being mounted in the area of the recess (20) on the block (18) and being able to be brought into positive-locking, latching engagement with the recess (19) of the tab (17).

17. Motor vehicle according to Claim 16, characterised in that the element (21) is pre-tensioned by means of an elastic component (22) in the direction of engagement with the recess (19).

18. Motor vehicle according to at least one of Claims 1 to 17, characterised in that the protective device (1) is configured in one piece with a collision guard bar, which is attached pivotably to the bodywork.

19. Protective device for an outside lamp of a motor vehicle, the protective device being pivotably disposed, in its operating position, in the light-emission area of the outside light, this being provided with a reflector and a lamp glass, characterised in that the protective device (1) exhibits bars (7) and a pivotable socket part (14) for the pivotable mounting of the protective device (1) about an essentially vertical axis (5) and a locking device (10) for the distance-adjusted arrangement of the protective device (1) in relation to the lamp glass (6) of the outside lamp.

20. Protective device according to Claim 19, characterised in that it can be locked in position at an adjustable distance from the lamp glass (6).

**Revendications**

1. Véhicule automobile comportant au moins un feu extérieur avec un réflecteur et un verre et un dispositif de protection pivotant disposé dans sa position de fonctionnement dans la zone de diffusion de la lumière du feu extérieur, caractérisé en ce que le dispositif de protection (1) peut pivoter autour d'un axe (5) essentiellement vertical disposé à l'extérieur de la zone de diffusion de la lumière (2) du feu extérieur et être bloqué dans la zone de diffusion de la lumière (2) à une distance réglable par rapport au verre de feu (6).

2. Véhicule automobile selon la revendication 1, caractérisé en ce que le dispositif de protection (1) peut être ajusté à une distance variable du verre (6).

3. Véhicule automobile selon la revendication 1 ou 2, caractérisé en ce que le feu extérieur est réalisé sous la forme d'un projecteur principal (12) et en ce que l'axe vertical (5) est disposé sur le côté du dispositif de protection (1) qui est tourné vers l'axe longitudinal du véhicule.

4. Véhicule automobile selon au moins l'une des revendications 1 à 3, caractérisé en ce que le feu extérieur est réalisé sous la forme d'un feu arrière (23) et en ce que l'axe vertical (5) est disposé sur le côté du dispositif de protection (1) qui est éloigné de l'axe longitudinal du véhicule.

5. Véhicule automobile selon au moins l'une des revendications 1 à 4, caractérisé en ce que le dispositif de protection (1) est disposé essentiellement dans un plan perpendiculaire à l'axe médian (4) du réflecteur (3).

6. Véhicule automobile selon au moins l'une des revendications 1 à 5, caractérisé en ce que le dispositif de protection (1) est réalisé sous la forme de plusieurs traverses (7) parallèles entre elles.

7. Véhicule automobile selon la revendication 6, caractérisé en ce que les traverses (7) sont disposées perpendiculairement à l'axe vertical (5).

8. Véhicule automobile selon la revendication 7, caractérisé en ce que chaque traverse (7) présente pour l'essentiel une section transversale rectangulaire.

9. Véhicule automobile selon au moins l'une des revendications 6 à 8, caractérisé en ce que les traverses (7) sont fixées sur un cadre (8).

10. Véhicule automobile selon au moins l'une des revendications 6 à 9, caractérisé en ce que les traverses (7) sont disposées horizontalement.

11. Véhicule automobile selon au moins l'une des revendications 6 à 9, caractérisé en ce que les traverses (7) sont disposées verticalement.

12. Véhicule automobile selon au moins l'une des revendications 6 à 11, caractérisé en ce que des éléments d'écartement (9) sont prévus entre les traverses (7).

13. Véhicule automobile selon au moins l'une des revendications 6 à 9 et 12, caractérisé en ce que le dispositif de protection (1) est réalisé sous la forme de plusieurs traveres (7) verticales et horizontales.

14. Véhicule automobile selon au moins l'une des revendications 6 à 13, caractérisé en ce qu'aucune traverse (7) n'est disposée dans la zone de la plus grande densité lumineuse du feu extérieur.

15. Véhicule automobile selon au moins l'une des revendications 1 à 14, caractérisé en ce qu'un dispositif d'arrêt (10) réglable par paliers est prévu pour bloquer le dispositif de protection (1).

16. Véhicule automobile selon la revendication 15, caractérisé en ce que le dispositif d'arrêt (10) présente une éclisse (17) ainsi qu'un bloc (18), l'éclisse (17) étant munie dans sa zone terminale libre d'un évidement (19) et le bloc (18) d'un évidement (20) destiné à recevoir l'éclisse (17) et un élément mobile (21) étant monté sur le bloc (18) dans la zone de l'évidement (20) et pouvant s'engager par complémentarité de formes dans l'évidement (19) de l'éclisse (17) pour réaliser un verrouillage.

17. Véhicule automobile selon la revendication 16, caractérisé en ce que l'élément (21) est prétendu à l'aide d'une pièce élastique (22) dans la direction d'engagement avec l'évidement (19).

18. Véhicule automobile selon au moins l'une des revendications 1 à 17, caractérisé en ce que le dispositif de protection (1) est réalisé d'une pièce avec un étrier anti-télescopage articulé sur la carosserie de manière à pouvoir pivoter.

19. Dispositif de protection pour un feu extérieur d'un véhicule automobile, le dispositif de protection étant disposé dans sa position de fonctionnement de manière à pouvoir pivoter dans la zone de diffusion de la lumière d'un feu extérieur muni d'un réflecteur et d'un verre, caractérisé en ce que le dispositif de protection (1) présente des traverses (7) et un palier de pivotement (14) pour le montage pivotant du dispositif de protection (1) autour d'un axe (5) essentiellement vertical ainsi qu'un dispositif d'arrêt (10) pour ajuster l'écartement du dispositif de protection (1) par rapport au verre (6) de feu extérieur.

20. Dispositif de protection selon la revendication 19, caractérisé en ce qu'il peut être bloqué à une distance réglable du verre (6) de feu.

FIG.1

FIG. 2

FIG. 3

FIG. 4

2

**FIG.** 5

**FIG.** 6